# EUROPEAN PATENT SPECIFICATION

(11) **EP 3 121 046 B1**
(45) Date of publication and mention of the grant of the patent: **09.09.2020**
(21) Application number: 15764713.2
(22) Date of filing: 20.03.2015
(51) Int. Cl.: B60K 11/02, B60H 1/00, B60H 1/08, B60H 1/32, B60L 1/00, B60L 3/00

(54) **TEMPERATURE CONTROL SYSTEM FOR ELECTRIC CAR**
TEMPERATURREGELUNGSSYSTEM FÜR ELEKTROFAHRZEUG
SYSTÈME DE RÉGULATION DE TEMPÉRATURE POUR VOITURE ÉLECTRIQUE

(30) Priority: 21.03.2014 US 201461968783 P
(43) Date of publication of application: 25.01.2017
(73) Proprietor: Aleees Eco Ark (Cayman) Co., Ltd., Grand Cayman KY1-1002 (KY)
(72) Inventor: YANG, Anthony An-Tao, Taoyuan City 33449 Taiwan (TW); CHEN, Gordon Ching, Taoyuan City 33449 Taiwan (TW)
(74) Representative: 2K Patentanwälte Blasberg Kewitz & Reichel
(86) International application number: PCT/CN2015/074808
(87) International publication number: WO 2015/139665

(56) References cited:
- WO-A1-2013/175739
- CN-A- 102 745 063
- FR-A1- 2 876 323
- JP-A- 2013 096 586
- US-A1- 2008 251 235

## Description

### FIELD OF THE INVENTION

The present invention relates to a thermal control system, and more particularly to a thermal control system of an electric vehicle that is selectively operated in one of three operation modes to adjust a circulation path of a cooling liquid according to the ambient temperature, the power system temperature and the cabinet air temperature.

### BACKGROUND OF THE INVENTION

Generally, the control mechanism and the operation of an electric vehicle rely on a power system. The power system comprises a motor, a motor controller, a motor driver and batteries. During the operation of the power system, heat energy (or waste heat) is generated and thus the temperature of the power system increases. The elevated temperature deteriorates the performance of the power system and reduces the use life of the power system. For cooling the power system of the electric vehicle, the electric vehicle is usually equipped with a radiator. Moreover, a cooling liquid circularly flows between the power system and the radiator. Consequently, the heat from the operating power system is transferred to the cooling liquid and dissipated to the air through the radiator.

However, the cooling performance of the radiator is obviously affected by the ambient temperature. For example, as the ambient temperature increases (e.g., higher than 35 degrees Celsius), the temperature of the cooling liquid within the radiator also increases. In case that the operating power of the power system is higher, the output temperature of the cooling liquid is possibly in the range between 50 and 60 degrees Celsius after the cooling liquid passes through the power system and the temperature of the cooling liquid is reduced by the radiator. The temperature of the cooling liquid is higher than the ideal operating temperature of the power system (e.g., in the range between 5 and 40 degrees Celsius). Under this circumstance, the temperature of the power system cannot be reduced to the ideal operating temperature after the power system is cooled by the circulation of the cooling liquid of the radiator. Consequently, the performance of the internal components of the power system is possibly degraded, the output of the power system becomes unstable, and the use life of the power system is shortened. Therefore, there is a need of providing a thermal control system for effectively maintaining the ideal operating temperature of the cooling liquid when the electric vehicle is operated various ambient temperatures.

Moreover, the heated airflow from the air-conditioning system of the electric vehicle is produced by converting electric energy into heat energy. When the electric vehicle is driven in an extreme cold weather, the air-conditioning system of the electric vehicle consumes much electric energy because the air-conditioning system provides the heated airflow. In comparison with the conventional vehicle, the electric vehicle is more power-consuming while driving in the extreme cold weather. Moreover, after the electric vehicle is charged, the mileage reduction becomes obvious. Therefore, there is a need of providing a method and a thermal control system for efficiently increasing the energy utilization efficiency of the heated airflow when the electric vehicle is driven in the extreme cold weather.

FR 2 876 323 A1 discloses a temperature regulation device for passenger compartment of motor vehicle. The device has a loop including heat exchanger unit with two heat exchangers that are mounted in parallel and have valves mounted in anti-parallel manner to supply heat exchangers. In the loop a coolant circulates along two opposite direction, in heating and cooling modes of a passenger compartment. The heat exchanger unit of the loop has a case including the two heat exchangers that are mounted in parallel and have the valves. The valves are mounted in anti-parallel manner to supply the heat exchangers in heating or cooling mode of the passenger compartment.

### SUMMARY OF THE INVENTION

An object of the present invention provides a thermal control system of an electric vehicle. The thermal control system is automatically operated in one of three operation modes to adjust a circulation path of a cooling liquid according to the ambient temperature, the power system temperature and the cabinet air temperature. Consequently, the temperature of the power system is stabilized, the performance and the use life of the power system are enhanced, and the power consumption of the air-conditioning system is reduced.

Another object of the present invention provides a thermal control system of an electric vehicle. When the ambient temperature increases or the power system is continuously operated in the high load condition, the temperature of the cooling liquid can be maintained at the ideal operating temperature by the thermal control system of the present invention. When the electric vehicle is driven in an extreme cold condition, the waste heat energy from the power system of the electric energy is recovered to increase the cabinet air temperature by the thermal control system of the present invention, and thus the power consumption of exchanger is connected with the second terminal of the second flow switch. An outlet of the motor cooling channel is connected with the third terminal of the first flow switch. An inlet of the motor cooling channel is connected with the third terminal of the second flow switch. An inlet of the radiator is connected with the inlet of the motor cooling channel. An outlet of the radiator is connected with the outlet of the motor cooling channel. The first flow switch and the second flow switch adjust a circulation path of a cooling liquid according to an operation mode of the thermal control system. If the operation mode is a normal cooling mode, the cooling liquid from the liquid temperature adjuster is transmitted to the cabinet heat exchanger. If the operation mode is a heat recovery mode, the cooling liquid from the motor cooling channel is transmitted to the cabinet heat exchanger. If the operation mode is an assisted-cooling mode, the cooling liquid from the liquid temperature adjuster is transmitted to the motor cooling channel.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the architecture of a thermal control system of an electric vehicle in a normal cooling mode according to an embodiment of the present invention;
FIG. 2 schematically illustrates the architecture of the thermal control system of the electric vehicle in a heat recovery mode;
FIG. 3 schematically illustrates the architecture of the thermal control system of the electric vehicle in an assisted-cooling mode; and the air-conditioning system is reduced. Consequently, the electric vehicle can be applied to various operation conditions.

In accordance with an aspect of the present invention, there is provided a thermal control system of an electric vehicle. The thermal control system includes a first flow switch, a second flow switch, a liquid temperature adjuster, a cabinet heat exchanger, a motor cooling channel, and a radiator. The first flow switch includes a first terminal, a second terminal and a third terminal. The second flow switch includes a first terminal, a second terminal and a third terminal. A first communication port of the liquid temperature adjuster is connected with the first terminal of the first flow switch. A second communication port of the liquid temperature adjuster is connected with the first terminal of the second flow switch. An inlet of the cabinet heat exchanger is connected with the second terminal of the first flow switch. An outlet of the cabinet heat exchanger is connected with the second terminal of the second flow switch. An outlet of the motor cooling channel is connected with the third terminal of the first flow switch. An inlet of the motor cooling channel is connected with the third terminal of the second flow switch. An outlet of the radiator is connected with the inlet of the motor cooling channel. An inlet of the radiator is connected with the outlet of the motor cooling channel. The first flow switch and the second flow switch adjust a circulation path of a cooling liquid according to an operation mode of the thermal control system. If the operation mode is a normal cooling mode, the cooling liquid from the liquid temperature adjuster is transmitted to the cabinet heat exchanger. If the operation mode is a heat recovery mode, the cooling liquid from the motor cooling channel is transmitted to the cabinet heat exchanger. If the operation mode is an assisted-cooling mode, the cooling liquid from the liquid temperature adjuster is transmitted to the motor cooling channel.

The above contents of the present invention will become more readily apparent to those ordinarily skilled in the art after reviewing the following detailed description and accompanying drawings, in which:

### BRIEF DESCRIPTION OF THE DRAWINGS

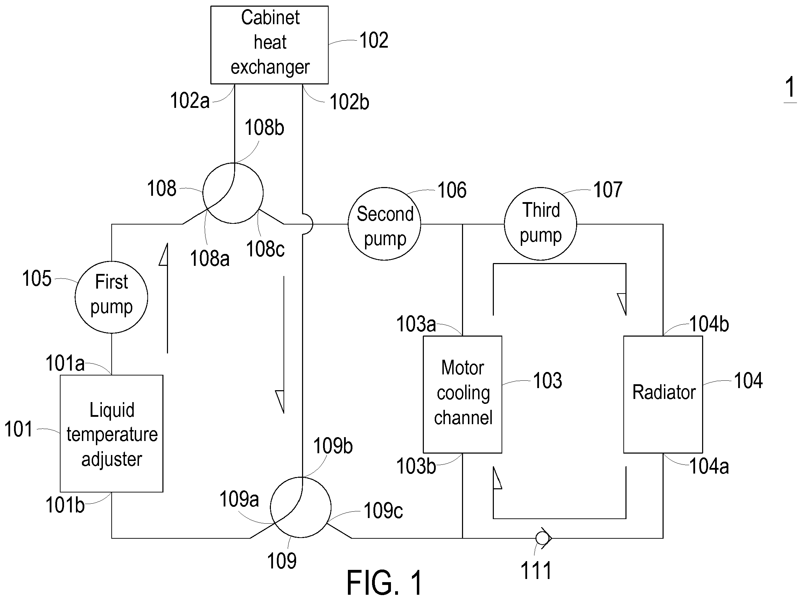

FIG. 1 schematically illustrates the architecture of a thermal control system of an electric vehicle in a normal cooling mode according to an embodiment of the present invention;

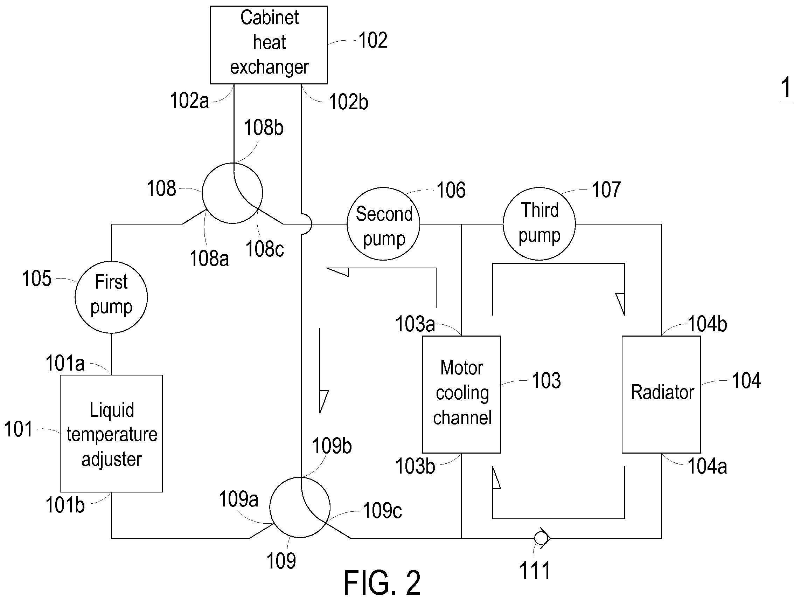

FIG. 2 schematically illustrates the architecture of the thermal control system of the electric vehicle in a heat recovery mode;

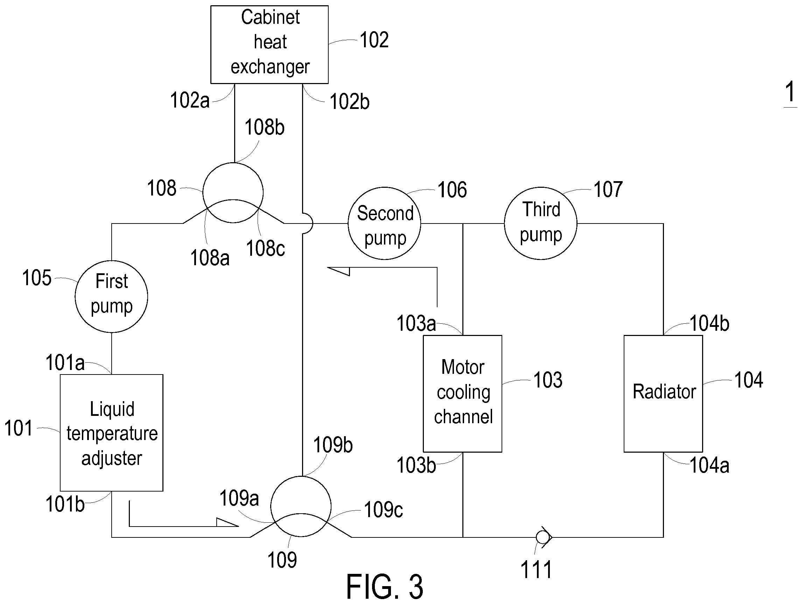

FIG. 3 schematically illustrates the architecture of the thermal control system of the electric vehicle in an assisted-cooling mode; and

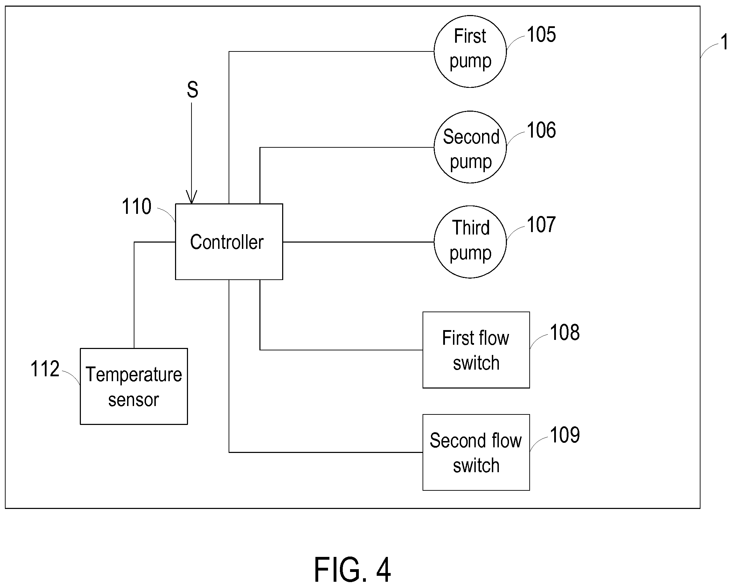

FIG. 4 is a schematic circuit block diagram of the thermal control system of the electric vehicle according to the embodiment of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. In the following embodiments and drawings, the elements irrelevant to the concepts of the present invention are omitted and not shown.

FIG. 1 schematically illustrates the architecture of a thermal control system of an electric vehicle in a normal cooling mode according to an embodiment of the present invention. FIG. 2 schematically illustrates the architecture of the thermal control system of the electric vehicle in a heat recovery mode. FIG. 3 schematically illustrates the architecture of the thermal control system of the electric vehicle in an assisted-cooling mode. FIG. 4 is a schematic circuit block diagram of the thermal control system of the electric vehicle according to the embodiment of the present invention. Please refer to FIGS. 1, 2, 3 and 4. The thermal control system 1 of the present invention is applied to a large electric vehicle. An example of the large electric vehicle includes but is not limited to an electric bus. In this embodiment, the thermal control system 1 comprises a liquid temperature adjuster 101, a cabinet heat exchanger 102, a motor cooling channel 103, a radiator 104, a first pump 105, a second pump 106, a third pump 107, a first flow switch 108, a second flow switch 109 and a controller 110. The controller 110 is electrically connected with the first pump 105, the second pump 106, the third pump 107, the first flow switch 108 and the second flow switch 109. The controller 110 is used for controlling the operations of the first pump 105, the second pump 106 and the third pump 107, and controlling the switching actions of the first flow switch 108 and the second flow switch 109. The first flow switch 108 and the second flow switch 109 are configured to distribute the cooling liquid and set the circulation path of the cooling liquid according to the operation mode of the thermal control system. For example, the operation modes of the thermal control system include a normal cooling mode, a heat recovery mode (also referred as an assisted-heating mode) and an assisted-cooling mode. The first flow switch 108 comprises a first terminal 108a, a second terminal 108b and a third terminal 108c. The second flow switch 109 comprises a first terminal 109a, a second terminal 109b and a third terminal 109c.

The liquid temperature adjuster 101 receives the cooling liquid. After the temperature of the cooling liquid is decreased by the liquid temperature adjuster 101, the cooling liquid is outputted from the liquid temperature adjuster 101. For example, the liquid temperature adjuster 101 is a water cooler with a refrigerant compression circulation unit. A first communication port 101a of the liquid temperature adjuster 101 is connected with the first terminal 108a of the first flow switch 108 through the first pump 105. A second communication port 101b of the liquid temperature adjuster 101 is connected with the first terminal 109a of the second flow switch 109. If the thermal control system 1 is in the normal cooling mode, the liquid temperature adjuster 101 receives the cooling liquid from the second flow switch 109. After the temperature of the cooling liquid is decreased by the liquid temperature adjuster 101, the cooling liquid is transmitted to the first terminal 108a of the first flow switch 108 through the first pump 105. If the thermal control system 1 of the electric vehicle is in the assisted-cooling mode, the liquid temperature adjuster 101 receives the cooling liquid through the first flow switch 108 and the first pump 105. After the temperature of the cooling liquid is decreased by the liquid temperature adjuster 101, the cooling liquid is outputted from the liquid temperature adjuster 101. Then, the cooling liquid is transmitted to the first terminal 109a of the second flow switch 109.

The cabinet heat exchanger 102 is heat exchanger using the cooling liquid to adjust the cabinet air temperature of the electric vehicle. An inlet 102a of the cabinet heat exchanger 102 is connected with the second terminal 108b of the first flow switch 108. An outlet 102b of the cabinet heat exchanger 102 is connected with the second terminal 109b of the second flow switch 109.

The motor cooling channel 103 is a cooling circulation channel system that is installed in a power system (e.g., a motor, a motor driver, a motor controller and/or batteries) and uses the cooling liquid to absorb the waste heat. An outlet 103a of the motor cooling channel 103 is connected with the third terminal 108c of the first flow switch 108 through the second pump 106. An inlet 103b of the motor cooling channel 103 is connected with the third terminal 109c of the second flow switch 109.

The radiator 104 is used for reducing the temperature of the cooling liquid through the ambient airflow. The cooling power of the radiator 104 varies with the varying ambient temperature. For example, as the ambient temperature increases, the cooling power of the radiator 104 decreases. An outlet 104a of the radiator 104 is connected with the inlet 103b of the motor cooling channel 103 and the third terminal 109c of the second flow switch 109. An inlet 104b of the radiator 104 is connected with the outlet 103a of the motor cooling channel 103 through the third pump 107. Moreover, the inlet 104b of the radiator 104 is connected with third terminal 108c of the first flow switch 108 through the third pump 107 and the second pump 106.

The first pump 105, the second pump 106 and the third pump 107 are used for pumping the cooling liquid and controlling the flowrates of the cooling liquid. The first pump 105 is connected between the first communication port 101a of the liquid temperature adjuster 101 and the first terminal 108a of the first flow switch 108. Moreover, the first pump 105 is used for driving the cooling liquid from the liquid temperature adjuster 101 to the first terminal 108a of the first flow switch 108, or driving the cooling liquid from the first terminal 108a of the first flow switch 108 to the first communication port 101a of the liquid temperature adjuster 101. The second pump 106 is connected between the outlet 103a of the motor cooling channel 103 and the third terminal 108c of the first flow switch 108. Moreover, the second pump 106 is used for driving the cooling liquid from the motor cooling channel 103 to the third terminal 108c of the first flow switch 108. The third pump 107 is connected between the outlet 103a of the motor cooling channel 103 and the inlet 104b of the radiator 104. Moreover, the third pump 107 is used for driving the cooling liquid from the motor cooling channel 103 to the inlet 104b of the radiator 104.

The first flow switch 108 adjusts the circulation path of the cooling liquid according to the operation mode of the thermal control system 1. If the thermal control system 1 is in the normal cooling mode, the first terminal 108a and the second terminal 108b of the first flow switch 108 are in communication with each other. Consequently, the cooling liquid in the liquid temperature adjuster 101 is pumped to the inlet 102a of the cabinet heat exchanger 102 by the first pump 105. If the thermal control system 1 is in the heat recovery mode, the second terminal 108b and the third terminal 108c of the first flow switch 108 are in communication with each other. Consequently, the cooling liquid in the motor cooling channel 103 is pumped to the inlet 102a of the cabinet heat exchanger 102 by the second pump 106. If the thermal control system 1 is in the assisted-cooling mode, the first terminal 108a and the third terminal 108c of the first flow switch 108 are in communication with each other. Consequently, the cooling liquid in the motor cooling channel 103 is pumped to the first communication port 101a of the liquid temperature adjuster 101 by the second pump 106 an the first pump 105.

The second flow switch 109 adjusts the circulation path of the cooling liquid according to the operation mode of the thermal control system 1. If the thermal control system 1 is in the normal cooling mode, the first terminal 109a and the second terminal 109b of the second flow switch 109 are in communication with each other. Consequently, the cooling liquid from the outlet 102b of the cabinet heat exchanger 102 is transmitted to the second communication port 101b of the liquid temperature adjuster 101. If the thermal control system 1 is in the heat recovery mode, the second terminal 109b and the third terminal 109c of the second flow switch 109 are in communication with each other. Consequently, the cooling liquid from the outlet 102b of the cabinet heat exchanger 102 is transmitted to the inlet 103b of the motor cooling channel 103. If the thermal control system 1 is in the assisted-cooling mode, the first terminal 109a and the third terminal 109c of the second flow switch 109 are in communication with each other. Consequently, the cooling liquid from the second communication port 101b of the liquid temperature adjuster 101 is transmitted to the inlet 103b of the motor cooling channel 103.

In this embodiment, the thermal control system 1 of the electric vehicle further comprises a unidirectional check valve 111. The unidirectional check valve 111 is arranged between the outlet 104a of the radiator 104 and the inlet 103b of the motor cooling channel 103. If the thermal control system 1 is in the heat recovery mode, the cooling liquid from the cabinet heat exchanger 102 is stopped from being transmitted to the radiator 104 through the second flow switch 109 by the unidirectional check valve 111. If the thermal control system 1 is in the assisted-cooling mode, the cooling liquid from the liquid temperature adjuster 101 is stopped from being transmitted to the radiator 104 through the second flow switch 109 by the unidirectional check valve 111. In some embodiments, the thermal control system 1 of the electric vehicle further comprises plural temperature sensors 112. The temperature sensors 112 are used for sensing the ambient temperature, the cabinet air temperature and the temperature of the cooling liquid at the inlet 103b of the motor cooling channel 103.

The operations of the thermal control system of the present invention in three different operation modes will be described as follows. Please refer to FIG. 1 again. In case that the ambient of the electric vehicle is moderate, it is not necessary to increase the cooling power of the power system. Meanwhile, the thermal control system 1 of the electric vehicle is in the normal cooling mode. The first terminal 108a and the second terminal 108b of the first flow switch 108 are in communication with each other under control of the controller 110, and the first terminal 109a and the second terminal 109b of the second flow switch 109 are in communication with each other under control of the controller 110. Moreover, the first pump 105 is enabled under control of the controller 110. Consequently, the cooling liquid in the liquid temperature adjuster 101 is pumped to the inlet 102a of the cabinet heat exchanger 102 through the first terminal 108a and the second terminal 108b of the first flow switch 108 by the first pump 105. That is, the cooling liquid is guided to the cabinet heat exchanger 102 to absorb the heat energy of the cabinet air to reduce the cabinet air temperature, then outputted from the outlet 102b of the cabinet heat exchanger 102 to the second communication port 101b of the liquid temperature adjuster 101 through and the second terminal 109b and the first terminal 109a of the second flow switch 109, and then the temperature of the cooling liquid is decreased by the liquid temperature adjuster 101. Since the cooling liquid circularly flows within the above circulation path, the cabinet air temperature is decreased by the cabinet heat exchanger 102 according to the user's requirements.

Moreover, the cooling liquid from the radiator 104 is received by the motor cooling channel 103 through the check value 111. That is, the cooling liquid circularly flows within the power system to absorb the waste heat that is generated by the power system. The second pump 106 is disabled under control of the controller 110, and the third pump 107 is enabled under control of the controller 110. Consequently, the cooling liquid in the motor cooling channel 103 is guided to the inlet 104b of the radiator 104. By the cooling circulation of the radiator 104, the temperature of the cooling liquid is decreased. After the cooling liquid is outputted from the outlet 104a of the radiator 104, the cooling liquid is sent to the inlet 103b of the motor cooling channel 103. Since the cooling liquid circularly flows within the above circulation path, the heat of the power system is dissipated away. That is, in the normal cooling mode, the liquid temperature adjuster 101 can provide the cooling liquid to the cabinet heat exchanger 102 to decrease the cabinet air temperature, and the motor cooling channel 103 can transfer the heated cooling liquid to the radiator 104 to decrease the temperature of the cooling liquid. Consequently, the cooling circuit can be circularly flowed at a low temperature. Since the temperature of the cooling liquid does not exceed the ideal operating temperature of the power system, the performance of the power system is enhanced.

Please refer to FIG. 2 again. If the ambient temperature of the electric vehicle is too low, the operation mode of the thermal control system 1 of the electric vehicle is automatically switched to the heat recovery mode. The second terminal 108b and the third terminal 108c of the first flow switch 108 are in communication with each other under control of the controller 110, and the second terminal 109b and the third terminal 109c of the second flow switch 109 are in communication with each other under control of the controller 110. Meanwhile, the loop defined by the first flow switch 108, the liquid temperature adjuster 101 and the second flow switch 109 is interrupted. In response to a heating demand signal S of the user, the second pump 106 is enabled under control of the controller 110. The cooling liquid in the motor cooling channel 103 (i.e., at higher temperature) is guided to the inlet 102a of the cabinet heat exchanger 102 through the third terminal 108c and the second terminal 108b of the first flow switch 108 by the second pump 106. The cooling liquid at the higher temperature is transferred through the cabinet heat exchanger 102 to provide heat energy to the cabinet air. That is, the temperature of the cabinet is increased. After the cooling liquid is outputted from the outlet 102b of the cabinet heat exchanger 102, the cooling liquid is introduced into the inlet 103b of the motor cooling channel 103 through the second terminal 109b and the third terminal 109c of the second flow switch 109.

Optionally, the third pump 107 is enabled under control of the controller. Consequently, a portion of the cooling liquid in the motor cooling channel 103 (i.e., at higher temperature) is guided to the inlet 104b of the radiator 104 by the third pump 107. After the cooling liquid is cooled by the radiator 104, the cooling liquid is outputted from the outlet 104a of the radiator 104 to the inlet 103b of the motor cooling channel 103 through the unidirectional check valve 111. Consequently, the change of the heat energy in the cabinet heat exchanger 102 is adjustable. Moreover, regardless of whether the required amount of the heated airflow is high or low, the cooling liquid in the motor cooling channel 103 is maintained at a specified temperature range. In some embodiment, if the ambient temperature is too low, the third pump 107 is disabled under control of the controller 110. Meanwhile, the radiator 104 is also disabled. That is, in the heat recovery mode, the waste heat energy of the power system is absorbed by the motor cooling channel 103 and provided to the cabinet heat exchanger 102. Consequently, the cabinet air temperature is increased. Since the cooling liquid circularly flows within the above circulation path, the heat of the power system is dissipated. Moreover, since the waste heat energy from the power system is recovered, the power consumption of the air-conditioning system is reduced.

Please refer to FIG. 3. If the ambient temperature of the electric vehicle is too high or the power system is continuously in the high load condition, the operation mode of the thermal control system 1 of the electric vehicle is automatically switched to the assisted-cooling mode. The first terminal 108a and the third terminal 108c of the first flow switch 108 are in communication with each other under control of the controller 110, and the first terminal 109a and the third terminal 109c of the second flow switch 109 are in communication with each other under control of the controller 110. Moreover, the second pump 106 is enabled under control of the controller 110. The cooling liquid in the motor cooling channel 103 (i.e., at higher temperature) is guided to the first communication port 101a of the liquid temperature adjuster 101 through the third terminal 108c and the first terminal 108a of the first flow switch 108 by the second pump 106 and the first pump 105. Consequently, the temperature of the cooling liquid is decreased by the liquid temperature adjuster 101. Then, the cooling liquid is guided back to the inlet 103b of the motor cooling channel 103 through the first terminal 109a and the third terminal 109c of the second flow switch 109.

In some embodiments, the third pump 107 is selectively enabled or disable under control of the controller 110 according to the ambient temperature. If the ambient temperature is too high (e.g., higher than 35 degrees Celsius), the third pump 107 is disabled under control of the controller 110. Consequently, the cooling liquid at the higher temperature will not be heated by the radiator 104. If the ambient temperature is moderate, the third pump 107 is enabled under control of the controller 110 and the temperature of the cooling liquid is decreased by the radiator 104. That is, in the assisted-cooling mode, the cooling liquid in the motor cooling channel 103 (i.e., at higher temperature) is guided to the liquid temperature adjuster 101. Consequently, the temperature of the cooling liquid is decreased by the liquid temperature adjuster 101. Since the cooling liquid circularly flows within the above circulation path, the temperature of the cooling liquid is decreased to the temperature lower than the ambient temperature. In other words, the temperature of the cooling liquid to be returned to the motor cooling channel 103 is maintained at the low temperature. Consequently, while the temperature of the cooling liquid is decreased, the power system is normally operated and the performance is satisfied.

From the above descriptions, the present invention provides a thermal control system of an electric vehicle. The thermal control system is automatically operated in a normal cooling mode, a heat recovery mode or an assisted-cooling mode to adjust a circulation path of a cooling liquid according to the ambient temperature, the power system temperature and the cabinet air temperature. Consequently, the temperature of the power system is stabilized, the performance and the use life of the power system are enhanced, and the power consumption of the air-conditioning system is reduced. When the ambient temperature increases or the power system is continuously operated in the high load condition, the temperature of the cooling liquid can be maintained at the ideal operating temperature by the thermal control system of the present invention. When the electric vehicle is driven in an extreme cold condition, the waste heat energy from the power system of the electric energy is recovered to increase the cabinet air temperature by the thermal control system of the present invention, and thus the power consumption of the air-conditioning system is reduced. Consequently, the electric vehicle can be applied to various operation conditions.

While the invention has been described in terms of what is presently considered to be the most practical and preferred embodiments, it is to be understood that the invention needs not be limited to the disclosed embodiment. On the contrary, it is intended to cover various modifications and similar arrangements included within the scope of the appended claims which are to be accorded with the broadest interpretation so as to encompass all such modifications and similar structures.

## Claims

1. A thermal control system (1) of an electric vehicle, comprising:
a first flow switch (108) comprising a first terminal (108a), a second terminal (108b) and a third terminal (108c);
a second flow switch (109) comprising a first terminal (109a), a second terminal (109b) and a third terminal (109c);
a liquid temperature adjuster (101), wherein a first communication port (101a) of the liquid temperature adjuster (101) is connected with the first terminal (108a) of the first flow switch (108), and a second communication port (101b) of the liquid temperature adjuster (101) is connected with the first terminal (109a) of the second flow switch (109);
a cabinet heat exchanger (102), wherein an inlet (102a) of the cabinet heat exchanger (102) is connected with the second terminal (108b) of the first flow switch (108), and an outlet (102b) of the cabinet heat exchanger (102) is connected with the second terminal (109b) of the second flow switch (109);
a motor cooling channel (103), wherein an outlet (103a) of the motor cooling channel (103) is connected with the third terminal (108c) of the first flow switch (108), and an inlet (103b) of the motor cooling channel (103) is connected with the third terminal (109c) of the second flow switch (109); and
a radiator (104), wherein an outlet (104a) of the radiator (104) is connected with the inlet (103b) of the motor cooling channel (103), and an inlet (104b) of the radiator (104) is connected with the outlet (103a) of the motor cooling channel (103),
wherein the first flow switch (108) and the second flow switch (109) adjust a circulation path of a cooling liquid according to an operation mode of the thermal control system (1), wherein if the operation mode is a normal cooling mode, the cooling liquid from the liquid temperature adjuster (101) is transmitted to the cabinet heat exchanger (102), wherein if the operation mode is a heat recovery mode, the cooling liquid from the motor cooling channel (103) is transmitted to the cabinet heat exchanger (102), wherein if the operation mode is an assisted-cooling mode, the cooling liquid from the liquid temperature adjuster (101) is transmitted to the motor cooling channel (103).

2. The thermal control system (1) of the electric vehicle according to claim 1, further comprising:
a first pump (105) connected between the first communication port (101a) of the liquid temperature adjuster (101) and the first terminal (108a) of the first flow switch (108) for driving the cooling liquid;
a second pump (106) connected between the outlet (103a) of the motor cooling channel (103) and the third terminal (108c) of the first flow switch (108) for driving the cooling liquid; and
a third pump (107) connected between the outlet (103a) of the motor cooling channel (103) and the inlet (104b) of the radiator (104) for driving the cooling liquid.

3. The thermal control system (1) of the electric vehicle according to claim 2, wherein the thermal control system (1) further comprises a controller (110), and the controller (110) is electrically connected with the first pump (105), the second pump (106), the third pump (107), the first flow switch (108) and the second flow switch (109) for controlling operations of the first pump (105), the second pump (106) and the third pump (107) and controlling switching actions of the first flow switch (108) and the second flow switch (109).

4. The thermal control system (1) of the electric vehicle according to claim 2, wherein if the thermal control system (1) is in the normal cooling mode, the first terminal (108a) and the second terminal (108b) of the first flow switch (108) are in communication with each other, the first terminal (109a) and the second terminal (109b) of the second flow switch (109) are in communication with each other, the first pump (105) is enabled, and the cooling liquid circularly flows within a circulation path that is defined by the liquid temperature adjuster (101), the first pump (105), the first flow switch (108), the cabinet heat exchanger (102) and the second flow switch (109) collaboratively.

5. The thermal control system (1) of the electric vehicle according to claim 4, wherein if the thermal control system (1) is in the normal cooling mode, the third pump (107) is further enabled, and the cooling liquid circularly flows within a circulation path that is defined by the motor cooling channel (103), the third pump (107) and the radiator (104) collaboratively.

6. The thermal control system (1) of the electric vehicle according to claim 2, wherein if the thermal control system (1) is in the heat recovery mode, the second terminal (108b) and the third terminal (108c) of the first flow switch (108) are in communication with each other, the second terminal (109b) and the third terminal (109c) of the second flow switch (109) are in communication with each other, the second pump (106) are enabled, and the cooling liquid circularly flows within a circulation path that is defined by the motor cooling channel (103), the second pump (106), the first flow switch (108), the cabinet heat exchanger (102) and the second flow switch (109) collaboratively.

7. The thermal control system (1) of the electric vehicle according to claim 6, wherein if the thermal control system (1) is in the heat recovery mode, the third pump (107) is further enabled, and the cooling liquid circularly flows within a circulation path that is defined by the motor cooling channel (103), the third pump (107) and the radiator (104) collaboratively.

8. The thermal control system (1) of the electric vehicle according to claim 2, wherein if the thermal control system (1) is in the assisted-cooling mode, the first terminal (108a) and the third terminal (108c) of the first flow switch (108) are in communication with each other, the first terminal (109a) and the third terminal (109c) of the second flow switch (109) are in communication with each other, the first pump (105) and the second pump (106) are enabled, and the cooling liquid circularly flows within a circulation path that is defined by the motor cooling channel (103), the second pump (106), the first flow switch (108), the first pump (105), the liquid temperature adjuster (101) and the second flow switch (109) collaboratively.

9. The thermal control system (1) of the electric vehicle according to claim 1, further comprising a unidirectional check valve (111), wherein the unidirectional check valve (111) is arranged between the outlet (104a) of the radiator (104) and the inlet (103b) of the motor cooling channel (103) for stopping the cooling liquid from returning to the radiator (104).

## Patentansprüche

1. Temperaturregelungssystem (1) für Elektrofahrzeug, umfassend:
einen ersten Strömungsschalter (108), der einen ersten Anschluss (108a), einen zweiten Anschluss (108b) und einen dritten Anschluss (108c) aufweist;
einen zweiten Strömungsschalter (109), der einen ersten Anschluss (109a), einen zweiten Anschluss (109b) und einen dritten Anschluss (109c) aufweist;
eine Flüssigkeitstemperatur-Einstelleinrichtung (101), wobei ein erster Verbindungsanschluss (101a) der Flüssigkeitstemperatur-Einstelleinrichtung (101) mit dem ersten Anschluss (108a) des ersten Strömungsschalters (108) verbunden ist und ein zweiter Verbindungsanschluss (101b) der Flüssigkeitstemperatur-Einstelleinrichtung (101) mit dem ersten Anschluss (109a) des zweiten Strömungsschalters (109) verbunden ist;
einen Gehäusewärmetauscher (102), wobei ein Einlass (102a) des Gehäusewärmetauschers (102) mit dem zweiten Anschluss (108b) des ersten Strömungsschalters (108) verbunden ist, und ein Auslass (102b) des Gehäusewärmetauschers (102) mit dem zweiten Anschluss (109b) des zweiten Strömungsschalters (109) verbunden ist;
einen Motorkühlkanal (103), wobei ein Auslass (103a) des Motorkühlkanals (103) mit dem dritten Anschluss (108c) des ersten Strömungsschalters (108) verbunden ist, und ein Einlass (103b) des Motorkühlkanals (103) mit dem dritten Anschluss (109c) des zweiten Strömungsschalters (109) verbunden ist; und
einen Kühler (104), wobei ein Auslass (104a) des Kühlers (104) mit dem Einlass (103b) des Motorkühlkanals (103) verbunden ist, und ein Einlass (104b) des Kühlers (104) mit dem Auslass (103a) des Motorkühlkanals (103) verbunden ist,
wobei der erste Strömungsschalter (108) und der zweite Strömungsschalter (109) einen Zirkulationsweg einer Kühlflüssigkeit gemäß einem Betriebsmodus des Temperaturregelungssystem (1) einstellen, wobei, wenn der Betriebsmodus ein normaler Kühlmodus ist, die Kühlflüssigkeit von der Flüssigkeitstemperatur-Einstelleinrichtung (101) zu dem Gehäusewärmetauscher (102) übertragen wird, wobei, wenn der Betriebsmodus eine Wärmerückgewinnungsmodus ist, die Kühlflüssigkeit von dem Motorkühlkanal (103) zu dem Gehäusewärmetauscher (102) übertragen wird, wobei, wenn der Betriebsmodus ein unterstützter Kühlmodus ist, die Kühlflüssigkeit von der Flüssigkeitstemperatur-Einstelleinrichtung (101) zu dem Motorkühlkanal (103) übertragen wird.

2. Temperaturregelungssystem (1) des Elektrofahrzeugs nach Anspruch 1, ferner umfassend:
eine erste Pumpe (105), die zwischen dem ersten Verbindungsanschluss (101a) der Flüssigkeitstemperatur-Einstelleinrichtung (101) und dem ersten Anschluss (108a) des ersten Strömungsschalters (108) angeschlossen ist, um die Kühlflüssigkeit anzutreiben;
eine zweite Pumpe (106), die zwischen dem Auslass (103a) des Motorkühlkanals (103) und dem dritten Anschluss (108c) des ersten Strömungsschalters (108) geschaltet ist, um die Kühlflüssigkeit anzutreiben; und
eine dritte Pumpe (107), die zwischen dem Auslass (103a) des Motorkühlkanals (103) und dem Einlass (104b) des Kühlers (104) angeschlossen ist, um die Kühlflüssigkeit anzutreiben.

3. Temperaturregelungssystem (1) des Elektrofahrzeugs nach Anspruch 2, wobei das Temperaturregelungssystem (1) ferner einen Regler (110) umfasst und der Regler (110) elektrisch mit der ersten Pumpe (105), der zweiten Pumpe (106), der dritten Pumpe (107), dem ersten Strömungsschalter (108) und dem zweiten Strömungsschalter (109) verbunden ist, um den Betrieb der ersten Pumpe (105), der zweiten Pumpe (106) und der dritten Pumpe (107) zu steuern und die Schaltvorgänge des ersten Strömungsschalters (108) und des zweiten Strömungsschalters (109) zu regeln.

4. Temperaturregelungssystem (1) des Elektrofahrzeugs nach Anspruch 2, wobei, wenn sich das Temperaturregelungssystem (1) im normalen Kühlmodus befindet, der erste Anschluss (108a) und der zweite Anschluss (108b) des ersten Strömungsschalters (108) miteinander in Verbindung stehen, der erste Anschluss (109a) und der zweite Anschluss (109b) des zweiten Strömungsschalters (109) miteinander in Verbindung stehen, die erste Pumpe (105) aktiviert ist und die Kühlflüssigkeit in einem Zirkulationsweg zirkuliert, der durch die Flüssigkeitstemperatur-Einstellvorrichtung (101), die erste Pumpe (105), den ersten Strömungsschalter (108), den Gehäusewärmetauscher (102) und den zweiten Strömungsschalter (109) gemeinsam definiert ist.

5. Temperaturregelungssystem(1) des Elektrofahrzeugs nach Anspruch 4, wobei, wenn sich das Temperaturregelungssystem (1) im normalen Kühlmodus befindet, die dritte Pumpe (107) weiter aktiviert wird und die Kühlflüssigkeit innerhalb eines Zirkulationsweges zirkuliert, der durch den Motorkühlkanal (103), die dritte Pumpe (107) und den Kühler (104) zusammenwirkend definiert ist.

6. Temperaturregelungssystem(1) des Elektrofahrzeugs nach Anspruch 2, wobei, wenn sich das Temperaturregelungssystem (1) im Wärmerückgewinnungsmodus befindet, der zweite Anschluss (108b) und der dritte Anschluss (108c) des ersten Strömungsschalters (108) miteinander in Verbindung stehen, der zweite Anschluss (109b) und der dritte Anschluss (109c) des zweiten Strömungsschalters (109) miteinander in Verbindung stehen, die zweite Pumpe (106) aktiviert sind und die Kühlflüssigkeit in einem Zirkulationsweg zirkuliert, der durch das Zusammenwirken des Motorkühlkanals (103), der zweiten Pumpe (106), des ersten Strömungsschalters (108), des Gehäusewärmetauschers (102) und des zweiten Strömungsschalters (109) definiert ist.

7. Temperaturregelungssystem (1) des Elektrofahrzeugs nach Anspruch 6, wobei, wenn sich das Temperaturregelungssystem (1) im Wärmerückgewinnungsmodus befindet, die dritte Pumpe (107) weiter aktiviert wird und die Kühlflüssigkeit innerhalb eines Zirkulationsweges zirkuliert, der durch den Motorkühlkanal (103), die dritte Pumpe (107) und den Kühler (104) zusammenwirkend definiert ist.

8. Temperaturregelungssystem (1) des Elektrofahrzeugs nach Anspruch 2, wobei, wenn sich das Temperaturregelungssystem (1) im unterstützten Kühlungsmodus befindet, der erste Anschluss (108a) und der dritte Anschluss (108c) des ersten Strömungsschalters (108) miteinander in Verbindung stehen, der erste Anschluss (109a) und der dritte Anschluss (109c) des zweiten Strömungsschalters (109) miteinander in Verbindung stehen, die erste Pumpe (105) und die zweite Pumpe (106) aktiviert sind und die Kühlflüssigkeit innerhalb eines Zirkulationsweges, der durch den Motorkühlkanal (103), die zweite Pumpe (106), den ersten Strömungsschalter (108), die erste Pumpe (105), die Flüssigkeitstemperatur-Einstellvorrichtung (101) und den zweiten Strömungsschalter (109) gemeinsam definiert ist, kreisförmig strömt.

9. Temperaturregelungssystem (1) des Elektrofahrzeugs nach Anspruch 1, das weiterhin ein unidirektionales Rückschlagventil (111) umfasst, wobei das unidirektionale Rückschlagventil (111) zwischen dem Auslass (104a) des Kühlers (104) und dem Einlass (103b) des Motorkühlkanals (103) angeordnet ist, um zu verhindern, dass die Kühlflüssigkeit zum Kühler (104) zurückkehrt.

## Revendications

1. Un système de régulation de température pour voiture électrique, comprenant:
un premier interrupteur de flux (108) comprenant une première borne (108a), une deuxième borne (108b) et une troisième borne (108c);
un deuxième commutateur de flux (109) comprenant une première borne (109a), une deuxième borne (109b) et une troisième borne (109c);
un régulateur de température de liquide (101), dans lequel un premier port de communication (101a) du régulateur de température de liquide (101) est connecté à la première borne (108a) du premier commutateur de flux (108), et un deuxième port de communication (101b) du régulateur de température de liquide (101) est connecté à la première borne (109a) du deuxième commutateur de flux (109);
un échangeur de chaleur de coffret (102), dans lequel une entrée (102a) de l'échangeur de chaleur de coffret (102) est connectée à la deuxième borne (108b) du premier commutateur de flux (108), et une sortie (102b) de l'échangeur de chaleur de coffret (102) est connectée à la deuxième borne (109b) du deuxième commutateur de flux (109);
un canal de refroidissement du moteur (103), dans lequel une sortie (103a) du canal de refroidissement du moteur (103) est connectée à la troisième borne (108c) du premier commutateur de flux (108), et une entrée (103b) du canal de refroidissement du moteur (103) est connectée à la troisième borne (109c) du deuxième commutateur de flux (109); et
un radiateur (104), dans lequel une sortie (104a) du radiateur (104) est reliée à l'entrée (103b) du canal de refroidissement du moteur (103), et une entrée (104b) du radiateur (104) est reliée à la sortie (103a) du canal de refroidissement du moteur (103),
dans lequel le premier commutateur de flux (108) et le second commutateur de flux (109) ajustent un trajet de circulation d'un liquide de refroidissement selon un mode de fonctionnement du système de contrôle thermique (1), dans lequel si le mode de fonctionnement est un mode de refroidissement normal, le liquide de refroidissement provenant du dispositif de réglage de la température du liquide (101) est transmis à l'échangeur de chaleur de l'armoire (102), dans lequel si le mode de fonctionnement est un mode de récupération de chaleur, le liquide de refroidissement du canal de refroidissement du moteur (103) est transmis à l'échangeur de chaleur de l'armoire (102), dans lequel si le mode de fonctionnement est un mode de refroidissement assisté, le liquide de refroidissement du dispositif de réglage de la température du liquide (101) est transmis au canal de refroidissement du moteur (103).

2. Le système de régulation de température (1) pour voiture électrique selon la revendication 1, comprenant en outre:
une première pompe (105) connectée entre le premier port de communication (101a) du dispositif de réglage de la température du liquide (101) et la première borne (108a) du premier commutateur de flux (108) pour entraîner le liquide de refroidissement;
une deuxième pompe (106) connectée entre la sortie (103a) du canal de refroidissement du moteur (103) et la troisième borne (108c) du premier commutateur de flux (108) pour entraîner le liquide de refroidissement; et
une troisième pompe (107) connectée entre la sortie (103a) du canal de refroidissement du moteur (103) et l'entrée (104b) du radiateur (104) pour entraîner le liquide de refroidissement.

3. Le système de régulation de température (1) pour voiture électrique selon la revendication 2, dans lequel le système de commande thermique (1) comprend en outre un contrôleur (110), et le contrôleur (110) est connecté électriquement à la première pompe (105), la deuxième pompe (106), la troisième pompe (107), le premier commutateur de flux (108) et le deuxième commutateur de flux (109) pour commander les opérations de la première pompe (105), de la deuxième pompe (106) et de la troisième pompe (107) et commander les actions de commutation du premier commutateur de flux (108) et du deuxième commutateur de flux (109).

4. Le système de régulation de température (1) pour voiture électrique selon la revendication 2, dans lequel, si le système de régulation thermique (1) est en mode de refroidissement normal, la première borne (108a) et la deuxième borne (108b) du premier commutateur de flux (108) sont en communication l'une avec l'autre, la première borne (109a) et la deuxième borne (109b) du deuxième commutateur de flux (109) sont en communication l'une avec l'autre, la première pompe (105) est activée, et le liquide de refroidissement circule circulairement dans un trajet de circulation qui est défini par le régulateur de température du liquide (101), la première pompe (105), le premier commutateur de flux (108), l'échangeur de chaleur de l'armoire (102) et le deuxième commutateur de flux (109) en collaboration.

5. Le système de régulation de température (1) pour voiture électrique selon la revendication 4, dans lequel, si le système de régulation thermique (1) est en mode de refroidissement normal, la troisième pompe (107) est en outre activée, et le liquide de refroidissement circule de manière circulaire dans un trajet de circulation qui est défini par le canal de refroidissement du moteur (103), la troisième pompe (107) et le radiateur (104) en collaboration.

6. Le système de régulation de température (1) pour voiture électrique selon la revendication 2, dans lequel, si le système de régulation thermique (1) est en mode de récupération de chaleur, la deuxième borne (108b) et la troisième borne (108c) du premier commutateur de flux (108) sont en communication l'une avec l'autre, la deuxième borne (109b) et la troisième borne (109c) du deuxième commutateur de flux (109) sont en communication l'une avec l'autre, la deuxième pompe (106) sont activées, et le liquide de refroidissement circule circulairement dans un trajet de circulation qui est défini par le canal de refroidissement du moteur (103), la deuxième pompe (106), le premier commutateur de flux (108), l'échangeur de chaleur de l'armoire (102) et le deuxième commutateur de flux (109) en collaboration.

7. Le système de régulation de température (1) pour voiture électrique selon la revendication 6, dans lequel, si le système de régulation thermique (1) est en mode de récupération de chaleur, la troisième pompe (107) est en outre activée, et le liquide de refroidissement circule de manière circulaire dans un trajet de circulation qui est défini par le canal de refroidissement du moteur (103), la troisième pompe (107) et le radiateur (104) en collaboration.

8. Le système de régulation de température (1) pour voiture électrique selon la revendication 2, dans lequel, si le système de régulation thermique (1) est en mode de refroidissement assisté, la première borne (108a) et la troisième borne (108c) du premier commutateur de flux (108) sont en communication l'une avec l'autre, la première borne (109a) et la troisième borne (109c) du deuxième commutateur de flux (109) sont en communication l'une avec l'autre, la première pompe (105) et la deuxième pompe (106) sont activées, et le liquide de refroidissement circule circulairement dans un trajet de circulation qui est défini par le canal de refroidissement du moteur (103), la deuxième pompe (106), le premier commutateur de flux (108), la première pompe (105), le régulateur de température du liquide (101) et le deuxième commutateur de flux (109) en collaboration.

9. Le système de régulation de température (1) pour voiture électrique selon la revendication 1, comprenant en outre un clapet anti-retour unidirectionnel (111), dans lequel le clapet anti-retour unidirectionnel (111) est disposé entre la sortie (104a) du radiateur (104) et l'entrée (103b) du canal de refroidissement du moteur (103) pour empêcher le liquide de refroidissement de retourner au radiateur (104).
